# EUROPEAN PATENT APPLICATION

(11) **EP 4 629 325 A1**
(43) Date of publication of application: **08.10.2025**
(21) Application number: 23896329.2
(22) Date of filing: 24.10.2023
(51) Int. Cl.: H01M 4/36, C01B 25/45

(54) **MULTI-POSITION CO-DOPED LITHIUM IRON MANGANESE PHOSPHATE COMPOSITE MATERIAL, PREPARATION METHOD THEREFOR AND SECONDARY BATTERY**

(30) Priority: 01.12.2022 CN 202211533028
(71) Applicant: Shenzhen Dynanonic Co., Ltd., Shenzhen, Guangdong 518000 (CN); Foshan Dynanonic Technology Co., Ltd., Foshan, Guangdong 528500 (CN)
(72) Inventor: XU, Rongyi, Shenzhen, Guangdong 518000 (CN); YANG, Yi, Shenzhen, Guangdong 518000 (CN); KONG, Lingyong, Shenzhen, Guangdong 518000 (CN); LI, Chen, Shenzhen, Guangdong 518000 (CN); LI, Hengli, Shenzhen, Guangdong 518000 (CN)
(74) Representative: Bals & Vogel Patentanwälte PartGmbB
(86) International application number: PCT/CN2023/126058
(87) International publication number: WO 2024/114174

(57) **Abstract**

The present application discloses a multi-site co-doped lithium manganese iron phosphate composite material and a preparation method thereof, and a secondary battery. The multi-site co-doped lithium manganese iron phosphate composite material includes: a core, and a carbon shell coated on an outer surface of the core. The core includes an active material having a general chemical formula represented by LiMn_{0.6}Fe_{0.4-x}AₓP_{1-y}D_{y}O_{4-z}E_{z}, A includes at least one of Mg, V, Al, Ba, Ti, Ca, and Zn; D includes B and/or Si; E includes at least one of F, Cl, and Br; 0 < x≤0.2, 0<y<1, 0<z<4. By co-doping the iron, phosphorus, and oxygen sites of the lithium manganese iron phosphate material, the specific capacity, structural stability, and ionic conductivity of the material are improved, and the polarization is reduced. The carbon shell improves the electrical conductivity of the material, limits the particle size of the composite material, and the particle size is small, thereby improving the compacted density of the composite material.

## Description

The present application claims priority of the Chinese patent application filed with the China Patent Office on December 1, 2022 with an application number 202211533028.2 and titled "MULTI-SITE CO-DOPED LITHIUM MANGANESE IRON PHOSPHATE COMPOSITE MATERIAL, PREPARATION METHOD, AND SECONDARY BATTERY", the entire contents of which are incorporated by reference in the present application.

### TECHNICAL FIELD

The present application relates to the technical field of battery materials, and in particular to a multi-site co-doped lithium manganese iron phosphate composite material and a preparation method thereof, and a secondary battery.

### BACKGROUND

With the soaring prices of lithium battery raw materials and the decline of new energy vehicle subsidy policies, the low-cost advantage of lithium iron phosphate has been magnified, and its output has surpassed ternary materials to become the most popular lithium battery cathode material. However, the current specific capacity development of lithium iron phosphate materials has approached the theoretical limit, and the energy density is difficult to increase, so it is an inevitable trend to find new cathode materials. Improving the specific capacity and voltage platform of cathode materials and reducing the cost of cathode materials have become the key paths to reduce costs and increase efficiency of batteries. Compared with lithium iron phosphate, lithium manganese iron phosphate LMFP has a similar theoretical specific capacity, but the voltage platform can reach about 3.8 V to 4.1 V, the theoretical energy density is 10% to 20% higher than lithium iron phosphate, and the low temperature performance is good. However, lithium manganese iron phosphate cathode materials also have some defects, such as: shorter cycle performance than lithium iron phosphate cathode materials; poorer rate performance than lithium iron phosphate cathode materials; and the processing performance of lithium manganese iron phosphate cathode materials being poorer than that of lithium iron phosphate cathode materials.

### SUMMARY

### TECHNICAL PROBLEMS

One of objectives of the embodiments of the present application is to provide a multi-site co-doped lithium manganese iron phosphate composite material and a preparation method thereof, and a secondary battery, which aims to solve the problems of poor cycle performance, rate performance, and processing performance of traditional lithium manganese iron phosphate cathode materials to a certain extent.

### TECHNICAL SOLUTIONS

In order to solve the above technical problems, embodiments of the present application adopt the following technical solutions:

In a first aspect, the present application provides a multi-site co-doped lithium manganese iron phosphate composite material. The multi-site co-doped lithium manganese iron phosphate composite material comprises: a core, and a carbon shell layer, which is coated on an outer surface of the core. The core comprises an active material having a general chemical formula represented by LiMn_{0.6}Fe_{0.4-x}AₓP_{1-y}D_{y}O_{4-z}E_{z}, in which, A comprises at least one of Mg, V, Al, Ba, Ti, Ca, and Zn; D comprises B and/or Si; E comprises at least one of F, Cl, and Br; 0<x≤0.2, 0<y<1, and 0<z<4.

In a second aspect, the present application provides a method for preparing a multi-site co-doped lithium manganese iron phosphate composite material, comprising the following steps: obtaining raw material components comprising a lithium source, a manganese source, a phosphorus source, an iron source, an A source, a D source, and an E source, according to a stoichiometric ratio of elements in the general chemical formula represented by LiMn_{0.6}Fe_{0.4-x}AₓP_{1-y}D_{y}O_{4-z}E_{z}, dissolving the raw material components in a solvent, adding a first organic carbon source and mixing for reaction, drying a resulting mixture and crushing, whereby obtaining a precursor powder; in which: the A source comprises at least one of a magnesium source, a vanadium source, an aluminum source, a barium source, a titanium source, a calcium source, and a zinc source; the D source comprises a boron source and/or a silicon source; the E source comprises at least one of a fluorine source, a chlorine source, and a bromine source; and 0<x≤0.2, 0<y<1, 0<z<4; and in an inert atmosphere, subjecting the precursor powder to a first sintering treatment, mixing with a second organic carbon source and granulating, and performing a second sintering treatment, whereby obtaining the multi-site co-doped lithium manganese iron phosphate composite material.

In a third aspect, the present application provides a secondary battery. The secondary battery comprises: a cathode, an anode, a separator, and an electrolyte; in which, the cathode comprises the above-mentioned multi-site co-doped lithium manganese iron phosphate composite material or the multi-site co-doped lithium manganese iron phosphate composite material prepared by the above-mentioned method.

The multi-site co-doped lithium manganese iron phosphate composite material provided in the first aspect of the present application is a core-shell structure, the core comprises an active material having a chemical formula represented by LiMn_{0.6}Fe_{0.4-x}AₓP_{1-y}D_{y}O_{4-z}E_{z}. At least one metal element of Mg, V, Al, Ba, Ti, Ca, and Zn is doped at the iron site, which is conducive to reducing the unit cell parameters and stabilizing the lattice structure, so that the lattice deformation of the lithium manganese iron phosphate material is reduced during the charge and discharge process, and the polarization degree of the material is reduced. In addition, increased doping degree after the iron site doping will cause more lattice defects, and the doped high-valent metal ions can generate more excess electrons, thereby improving the conductivity of the lithium manganese iron phosphate material. Doping with B and/or Si at the phosphorus site can effectively improve the reversibility of the lithium manganese iron phosphate material, reduce lattice distortion, reduce Li⁺ diffusion resistance, and improve ionic conductivity; meanwhile, the change of Mn²⁺ ion radius at the lithium site is prevented during charging and discharging, resulting in the collapse of the structure of the lithium manganese iron phosphate material and the blockage of the Li⁺ channel. Doping with at least one halogen among F, Cl, and Br at the oxygen site can improve the structural stability of the lithium manganese iron phosphate material, reduce the degree of cation disorder, weaken the Li-O bond energy, and facilitate the diffusion of Li⁺ in the lattice, so that the material discharge specific capacity is increased and the cycle performance is also improved. In addition, the composite material also comprises a carbon shell layer coated on the outer surface of the core, which is not only conducive to improving the electrical conductivity of the composite material, but also can limit the particle size of the composite material, so that the particle size of the composite material is small, and the uniformity is high, the active specific surface area is large, which is conducive to improving the compacted density of the lithium manganese iron phosphate composite material, thereby improving the specific capacity of the composite material.

In the preparation method of the multi-site co-doped lithium manganese iron phosphate composite material provided in the second aspect of the present application, the raw material components are obtained and dissolved in a same solvent, to which, an organic carbon source is then added and mixed for reaction. In this process, the organic carbon source and the slurry of the raw material components undergo an oxidation-reduction reaction, releasing a large amount of heat, evaporating and removing most of the water in the mixed system to form a multi-component doped lithium manganese iron phosphate precursor. The solvent is removed by drying, which reduces the energy consumption of the subsequent sintering treatment, and a resulting product is crushed into a precursor powder. Then, a first sintering treatment is carried out in an inert atmosphere. During the sintering process, the organic carbon source doped in the precursor functions in consuming the acid radical ions in the precursor, as well as in protecting the lithium manganese iron phosphate from oxidation, and the lithium manganese iron phosphate co-doped at the iron, phosphorus, and oxygen sites is gradually formed. Then, a first sintering treatment product is mixed with a second organic carbon source, followed by granulation, so that the second organic carbon source is uniformly attached to the surface of the first sintering treatment product, and then the second sintering treatment is performed to completely form the lithium manganese iron phosphate co-doped at the iron site, the phosphorus site, and the oxygen site. Meanwhile, the organic carbon source is carbonized into a carbon material, and a uniform carbon coating layer is formed on the surface of the lithium manganese iron phosphate particles co-doped at the iron site, the phosphorus site, and the oxygen site to obtain A lithium manganese iron phosphate composite material co-doped at the iron site, the phosphorus site, and the oxygen site. The preparation process of the present application is simple, suitable for industrial large-scale production and application, and the prepared multi-site co-doped lithium manganese iron phosphate composite material has high specific capacity, structural stability, ionic conductivity, low polarizability, small particle size, large active specific surface area, and high compacted density.

The secondary battery provided in the third aspect of the present application, because the cathode contains the above-mentioned multi-site co-doped lithium manganese iron phosphate composite material, the composite material has comprehensive properties such as specific capacity, high structural stability, high ionic conductivity, low polarization rate, small particle size, high uniformity, and high compacted density. Therefore, it is beneficial to improving the electrochemical properties such as energy density, cycle stability, and rate capability of the secondary battery.

### BRIEF DESCRIPTION OF THE DRAWINGS

In order to more clearly illustrate the technical solutions in the embodiments of the present application, the drawings required for use in the embodiments or exemplary technical descriptions will be briefly introduced below. Obviously, the drawings described below are only some embodiments of the present application. For ordinary technicians in this field, other drawings can be obtained based on these drawings without paying creative work.

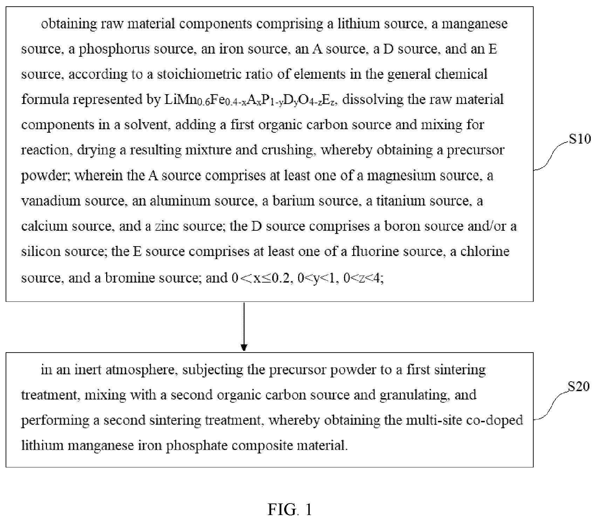

FIG. 1 is a schematic flow chart of a method for preparing a multi-site co-doped lithium manganese iron phosphate composite material provided in an embodiment of the present application.

### DESCRIPTION OF THE EMBODIMENTS

In order to make the purpose, technical solution and advantages of the present application clearer, the present application is further described in detail below in conjunction with the accompanying drawings and embodiments. It should be understood that the specific embodiments described herein are only used to explain the present invention and are not used to limit the present application.

In the present application, the term "and/or" describes the association relationship of the associated objects, indicating that there may be three relationships. For example, A and/or B can represent: A exists alone, A and B exist meanwhile, and B exists alone. Among them, A and B can be singular or plural. The character "/" generally indicates that the associated objects before and after are in an "or" relationship. In the present application, "at least one" means one or more, and "multiple" means two or more. "At least one of the following items (items)" or similar expressions refers to any combination of these items, including any combination of single items (items) or plural items (items). The singular forms of "a" and "the" used in the embodiments of the present application and the appended claims are also intended to include plural forms unless the context clearly indicates other meanings. The weight of the relevant components mentioned in the examples of the present specification can not only refer to the specific content of each component, but also represent the proportional relationship between the weights of the components. Therefore, as long as the content of the relevant components in the examples of the present specification is proportionally enlarged or reduced, it is within the scope disclosed in the examples of the present specification. Specifically, the mass in the examples of the present specification can be µg, mg, g, kg and other mass units known in the chemical industry.

A first aspect of embodiments of the present application provides a multi-site co-doped lithium manganese iron phosphate composite material. The multi-site co-doped lithium manganese iron phosphate composite material comprises: a core, and a carbon shell layer, which is coated on an outer surface of the core. The core comprises an active material having a general chemical formula represented by LiMn_{0.6}Fe_{0.4-x}AₓP_{1-y}D_{y}O_{4-z}E_{z.}, in which, A comprises at least one of Mg, V, Al, Ba, Ti, Ca, and Zn; D comprises B and/or Si; E comprises at least one of F, Cl, and Br; 0<x≤0.2, 0<y<1, and 0<z<4.

The multi-site co-doped lithium manganese iron phosphate composite material provided in the first aspect of the present application is a core-shell structure, the core comprises an active material having a chemical formula represented by LiMn_{0.6}Fe_{0.4-x}AₓP_{1-y}D_{y}O_{4-z}E_{z}. At least one metal element of Mg, V, Al, Ba, Ti, Ca, and Zn is doped at the iron site, which is conducive to reducing the unit cell parameters and stabilizing the lattice structure, so that the lattice deformation of the lithium manganese iron phosphate material is reduced during the charge and discharge process, and the polarization degree of the material is reduced. In addition, increased doping degree after the iron site doping will cause more lattice defects, and the doped high-valent metal ions can generate more excess electrons, thereby improving the conductivity of the lithium manganese iron phosphate material. Doping with B and/or Si at the phosphorus site can effectively improve the reversibility of the lithium manganese iron phosphate material, reduce lattice distortion, reduce Li⁺ diffusion resistance, and improve ionic conductivity; meanwhile, the change of Mn²⁺ ion radius at the lithium site is prevented during charging and discharging, resulting in the collapse of the structure of the lithium manganese iron phosphate material and the blockage of the Li⁺ channel. Doping with at least one halogen among F, Cl, and Br at the oxygen site can improve the structural stability of the lithium manganese iron phosphate material, reduce the degree of cation disorder, weaken the Li-O bond energy, and facilitate the diffusion of Li⁺ in the lattice, so that the material discharge specific capacity is increased and the cycle performance is also improved. In addition, the composite material also comprises a carbon shell layer coated on the outer surface of the core, which is not only conducive to improving the electrical conductivity of the composite material, but also can limit the particle size of the composite material, so that the particle size of the composite material is small, and the uniformity is high, the active specific surface area is large, which is conducive to improving the compacted density of the lithium manganese iron phosphate composite material, thereby improving the specific capacity of the composite material.

In the active material of the core of the multi-site co-doped lithium manganese iron phosphate composite material of the embodiments of the present application, the doping molar ratio of Mg, V, Al, Ba, Ti, Ca, Zn, etc. at the iron site is 0<x≤0.2; the doping molar ratio of B and/or Si at the phosphorus site is 0<y<1; the doping molar ratio of F, Cl, Br, etc. at the oxygen site is 0<z<4. In this case, the doping amounts of iron, phosphorus, and oxygen sites are conducive to improving the electrochemical properties of the lithium manganese iron phosphate composite material as well as maintaining the structural stability of the lithium manganese iron phosphate material. The radius of Mg ions doped at the iron site is between the radii of Fe²⁺ and Fe³⁺, which has a stabilizing effect on the crystal structure during the charge and discharge process. Vanadium and aluminum have valences higher than iron and ion radius thereof are similar to that of iron. The high-valence doping allows Fe²⁺/Fe³⁺ to coexist, improving the intrinsic conductivity of the material. Titanium doping will reduce the resistance of electron transmission at the electrode/solution interface and stabilize the lattice, which is beneficial to the material's cycle and rate performance. Calcium and barium doping are beneficial to control the morphology and particle size of the material and can increase the diffusion rate of lithium ions. Zinc doping can increase the conductivity of the material and improve the electrical properties of the lithium manganese iron phosphate composite material. Halogen elements such as fluorine, chlorine, and bromine doped at the oxygen site can inhibit the dislocation defects of the material, especially fluorine and chlorine have better effects. Boron is doped at the phosphorus site, and the LiO₅ hexahedron, FeO₅ hexahedron, and BO₃ in the doped LiFeBO₃ will not form a structure with shared edges; and BO₃ is a planar structure, and the hindering effect on Li⁺ diffusion is not as obvious as that of PO₄ tetrahedron. Therefore, it can be seen that B doping at the phosphorus site is beneficial to improving the conductivity of LiFePO₄ and increasing the lithium ion diffusion coefficient. Doping silicon at the phosphorus site can promote the Li ion migration rate.

In some possible implementations, in the active material having the general chemical formula represented by LiMn_{0.6}Fe_{0.4-x}AₓP_{1-y}D_{y}O_{4-z}E_{z}, 0<x≤0.01, 0<y<0.01, and 0<z<0.04. In this doping situation, the specific capacity, structural stability, ionic conductivity of the lithium manganese iron phosphate material can be better improved, and the polarization can be reduced.

In some possible implementations, based on a total mass of the multi-site co-doped lithium manganese iron phosphate composite material being 100%, a mass percentage of the carbon shell layer is 1% to 1.6%. In this case, the mass percentage of the carbon shell layer is not only beneficial to improving the conductivity of the lithium manganese iron phosphate composite material, but also can completely cover the active material of the core, suppress the particle size of the core, such that the lithium manganese iron phosphate composite material have small particle size with high uniformity, and have large active specific surface area, which is conducive to improving the compacted density of the composite material. In some specific embodiments, based on a total mass of the multi-site co-doped lithium manganese iron phosphate composite material being 100%, and the mass percentage of the carbon shell layer can be 1% to 1.2%, 1.2% to 14%, 1.4% to 1.6%, etc.

In some possible implementations, a thickness of the carbon shell layer is 2 nm to 5 nm. The carbon shell layer of this thickness can form a complete coating layer on the outer surface of the active material of the core particle, effectively suppressing the size of the lithium manganese iron phosphate particles, such that the particle size is small and uniform. In addition, the carbon shell layer of this thickness is also conducive to improving the conductivity of the lithium manganese iron phosphate composite material. In some specific embodiments, the thickness of the carbon shell layer can be 2 nm to 3 nm, 3 nm to 4 nm, 4 nm to 5 nm, etc.

In some possible implementations, a primary particle size of the multi-site co-doped lithium manganese iron phosphate composite material is 50 nm to 300 nm. The primary particle size refers to the particle size of a single particle of the multi-site co-doped lithium manganese iron phosphate composite material under microscopic test conditions, that is, the particle size of a single microscopic particle. The primary particle size of the multi-site co-doped lithium manganese iron phosphate composite material of the present application embodiment is nanometer-scale, with a small particle size and a large active specific surface area. When being applied to the cathode material of the secondary battery, the multi-site co-doped lithium manganese iron phosphate composite material with such particle size is beneficial to improving the efficiencies of ion intercalation and de-intercalation, thereby improving the rate performance and cycle performance of the secondary battery. In some specific embodiments, the primary particle size of the multi-site co-doped lithium manganese iron phosphate composite material can be 50 nm to 100 nm, 100 nm to 150 nm, 150 nm to 200 nm, 200 nm to 250 nm, 250 nm to 300 nm, etc.

In some possible implementations, a secondary particle size of the multi-site co-doped lithium manganese iron phosphate composite material is 0.5 µm to 1.5 µm. The secondary particle size refers to the size of the clustered particles formed by stacking single particles of the multi-site co-doped lithium manganese iron phosphate composite material, that is, the macroscopic particle size formed by stacking multiple primary particles. The multi-site co-doped lithium manganese iron phosphate composite material of the embodiments of the present application has a small macroscopic particle size and high uniformity, which is beneficial to improving the compacted density of the multi-site co-doped lithium manganese iron phosphate composite material, and it is beneficial to improving the energy density when the multi-site co-doped lithium manganese iron phosphate composite material is applied to the cathode material of the secondary battery. In some specific embodiments, the secondary particle size of the multi-site co-doped lithium manganese iron phosphate composite material can be 0.5 µm to 0.8 µm, 0.8 µm to 1.0 µm, 1.0 µm to 1.2 µm, 1.2 µm to 1.5 µm, etc.

The multi-site co-doped lithium manganese iron phosphate composite material provided in the above embodiments of the present application can be prepared by the method provided by the embodiments below.

As shown in FIG. 1, the second aspect of the embodiment of the present application provides a method for preparing a multi-site co-doped lithium manganese iron phosphate composite material, comprising the following steps:

S10, obtaining raw material components comprising a lithium source, a manganese source, a phosphorus source, an iron source, an A source, a D source, and an E source, according to a stoichiometric ratio of elements in the general chemical formula represented by LiMn_{0.6}Fe_{0.4-x}AₓP_{1-y}D_{y}O_{4-z}E_{z}, dissolving the raw material components in a solvent, adding a first organic carbon source and mixing for reaction, drying a resulting mixture and crushing, whereby obtaining a precursor powder; wherein the A source comprises at least one of a magnesium source, a vanadium source, an aluminum source, a barium source, a titanium source, a calcium source, and a zinc source; the D source comprises a boron source and/or a silicon source; the E source comprises at least one of a fluorine source, a chlorine source, and a bromine source; and 0<x≤0.2, 0<y<1, 0<z<4; and

S20, in an inert atmosphere, subjecting the precursor powder to a first sintering treatment, mixing with a second organic carbon source and granulating, and performing a second sintering treatment, whereby obtaining the multi-site co-doped lithium manganese iron phosphate composite material.

In the preparation method of the multi-site co-doped lithium manganese iron phosphate composite material provided in the second aspect of the present application, the raw material components are obtained and dissolved in a same solvent, to which, an organic carbon source is then added and mixed for reaction. In this process, the organic carbon source and the slurry of the raw material components undergo an oxidation-reduction reaction, releasing a large amount of heat, evaporating and removing most of the water in the mixed system to form a multi-component doped lithium manganese iron phosphate precursor. The solvent is removed by drying, which reduces the energy consumption of the subsequent sintering treatment, and a resulting product is crushed into a precursor powder. Then, a first sintering treatment is carried out in an inert atmosphere. During the sintering process, the organic carbon source doped in the precursor functions in consuming the acid radical ions in the precursor, as well as in protecting the lithium manganese iron phosphate from oxidation, and the lithium manganese iron phosphate co-doped at the iron, phosphorus, and oxygen sites is gradually formed. Then, a first sintering treatment product is mixed with a second organic carbon source, followed by granulation, so that the second organic carbon source is uniformly attached to the surface of the first sintering treatment product, and then the second sintering treatment is performed to completely form the lithium manganese iron phosphate co-doped at the iron site, the phosphorus site, and the oxygen site. Meanwhile, the organic carbon source is carbonized into a carbon material, and a uniform carbon coating layer is formed on the surface of the lithium manganese iron phosphate particles co-doped at the iron site, the phosphorus site, and the oxygen site to obtain A lithium manganese iron phosphate composite material co-doped at the iron site, the phosphorus site, and the oxygen site. The preparation process of the present application is simple, suitable for industrial large-scale production and application, and the prepared multi-site co-doped lithium manganese iron phosphate composite material has high specific capacity, structural stability, ionic conductivity, low polarizability, small particle size, large active specific surface area, and high compacted density.

In the above step S10, according to the stoichiometric ratio of the elements in the general chemical formula represented by LiMn_{0.6}Fe_{0.4-x}AₓP_{1-y}D_{y}O_{4-z}E_{z}, A comprises at least one of Mg, V, Al, Ba, Ti, Ca, and Zn; D comprises B and/or Si; E comprises at least one of F, Cl, and Br; 0<x≤0.2, 0<y<1, and 0<z<4.

In some possible implementations, in the active material having the general chemical formula represented by LiMn_{0.6}Fe_{0.4-x}AₓP_{1-y}D_{y}O_{4-z}E_{z}, 0<x≤0.01, 0<y<0.01, and 0<z<0.04. In this doping condition, the specific capacity, structural stability, and ionic conductivity of the lithium manganese iron phosphate material can be better improved, and the polarization can be reduced.

In some possible implementations, the solvent comprises water and/or nitric acid.

In some possible implementations, the lithium source comprises at least one of lithium carbonate, lithium hydroxide, lithium acetate, lithium oxalate, and lithium chloride. In some possible implementations, the manganese source comprises at least one of manganese tetraoxide, manganese dioxide, manganese carbonate, manganese oxalate, manganese lactate, manganese chloride, manganese sulfate, manganese nitrate, and manganese dioxide. In some possible implementations, the phosphorus source comprises at least one of phosphoric acid, diammonium hydrogen phosphate, and ammonium dihydrogen phosphate. In some possible implementations, the iron source comprises at least one of ferrous oxalate, ferric oxalate, ferrous acetate, ferric acetate, ferrous nitrate, ferric nitrate, ferric phosphate, iron oxide, ferrous sulfate, ferric sulfate, ferrous chloride, ferric chloride.

In some possible implementations, the magnesium source comprises at least one of magnesium nitrate, magnesium chloride, magnesium carbonate, and magnesium sulfate. In some possible implementations, the vanadium source comprises at least one of NH₄VO₃, vanadium nitrate, and vanadium pentoxide. In some possible implementations, the aluminum source comprises at least one of aluminum nitrate, aluminum chloride, aluminum carbonate, and aluminum sulfate. In some possible implementations, the calcium source comprises at least one of calcium hydroxide, calcium oxide, and a calcium salt. In some possible implementations, the barium source comprises at least one of barium hydroxide, barium oxide, and a barium salt. In some possible implementations, the titanium source comprises at least one of titanium hydroxide, titanium oxide, and a titanium salt. In some possible implementations, the zinc source comprises at least one of zinc powder, zinc chloride, zinc sulfate, and a zinc gluconate.

In some possible implementations, the boron source comprises at least one of H₃BO₃, B₂O₃, BCl₃, and B₂S₃. In some possible implementations, the silicon source comprises at least one of tetraethyl orthosilicate, methyltriethoxysilane, and a silane coupling agent. In some possible implementations, the fluorine source comprises at least one of LiF, CaF₂, and NaF.

In some possible implementations, the chlorine source comprises at least one of LiCl·H₂O, HCl, NaCl, and KCl. In some possible implementations, the bromine source comprises at least one of LiBr·H₂O, HBr, NaBr, and KBr.

The raw material components such as lithium source, manganese source, phosphorus source, iron source, A source, D source and E source obtained in the above embodiments of the present application all have good solubility and can be dissolved evenly and stably in the solvent, which is conducive to the preparation of a multi-component doped lithium manganese iron phosphate precursor, which is then sintered to prepare a lithium manganese iron phosphate co-doped at the iron site, the phosphorus site, and the oxygen site.

In some possible implementations, after the raw material components are dissolved in a solvent, the first organic carbon source added comprises at least one of citric acid, glucose, sucrose, soluble starch, salicylic acid, tartaric acid, oxalic acid, polysorbate, polyethylene glycol, sorbitan fatty acid ester, stearic acid, fatty acid glyceride, and amino acid. On the one hand, these organic carbon sources have good solubility in the solvent, can be evenly and stably dispersed in the solvent, and can undergo redox reactions with acidic ions in the solution during the synthesis of the lithium manganese iron phosphate precursor, during which, a large amount of heat is released and the solvent in the reaction system is removed by evaporation, so as to form lithium manganese iron phosphate precursor particles. On the other hand, in the first sintering process of the lithium manganese iron phosphate precursor, these organic carbon sources consume the acid radical ions in the precursor and protect the lithium manganese iron phosphate from oxidation.

In some possible implementations, a mass ratio of the raw material components to the first organic carbon source is 1: (0.1 to 0.2). The organic carbon source of this mass ratio fully ensures the synthesis of the multi-component doped lithium manganese iron phosphate precursor, and plays a sufficient role as a reducing agent and oxidation protective agent in the first sintering process. If too much carbon source is added, the particles after the first sintering will agglomerate to form particles with larger particle sizes, and the subsequent treatment process will not be conducive to breaking apart the agglomerates and preparing small size composite particles. In some specific embodiments, the mass ratio of the raw material component to the first organic carbon source can be 1: (0.1 to 0.12), 1: (0.12 to 0.15), 1: (0.15 to 0.17), 1: (0.17 to 0.2), etc. In some specific embodiments, the mass ratio of the raw material component to the first organic carbon source is 1: 0.2.

In some possible implementations, in the above step S20, conditions for the first sintering treatment comprise: sintering in the inert atmosphere at a temperature of 500°C to 600°C for 5 hrs to 7 hrs to gradually convert the precursor powder into the lithium manganese iron phosphate with co-doped iron, phosphorus, and oxygen sites. If the temperature is too high, the primary particles of lithium manganese iron phosphate will be too large, which is not conducive to the preparation of particles with small particle size and high uniformity. In some specific embodiments, the first sintering treatment temperature condition can be 500°C to 550°C, 550 to 600°C, etc., and the sintering time can be 5 hrs to 6 hrs, 6 hrs to 7 hrs, etc.

In some possible implementations, the step of mixing and granulating comprises: preparing a mixed slurry from a product of the first sintering treatment and a second organic carbon source, so that the organic carbon source is evenly coated on the surface of the product of the first sintering treatment, thus being conducive to effectively limiting the growth of lithium manganese iron phosphate particles in the subsequent sintering process; and grinding and sieving, so that the particle sizes are refined and the uniformity of the particle size is improved, and then spray drying, so that the organic carbon source is closely attached to the surface of the first sintering product to obtain a granulated powder. In some specific embodiments, after grinding for 10 to 20 times, the particles pass through a 100 to 300 mesh screen.

In some possible implementations, the conditions of the second sintering treatment comprise: calcining in an inert atmosphere at a temperature of 650°C to 750°C for 8 hrs to 10 hrs, so that the multi-component doped lithium manganese iron phosphate precursor powder is fully and thoroughly converted into lithium manganese iron phosphate particles with co-doped iron, phosphorus, and oxygen sites, and the organic carbon source attached to the surface is carbonized into a carbon material, and a dense carbon coating layer is formed in situ on the surface of the lithium manganese iron phosphate particles. If the sintering temperature is too high, the particle size of the composite particles will become larger, the specific capacity will decrease, and the pH value will increase, affecting the battery performance; and if the sintering temperature is too low; the particle size of the composite particles will be too small, the compacted density will be relatively low, affecting the battery production and making the pole piece easy to crack. In some specific embodiments, the second sintering treatment temperature condition can be 650°C to 700°C, 700°C to 750°C, etc., and the sintering time can be 8 hrs to 9 hrs, 9 hrs to 10 hrs, etc.

In some possible implementations, the second organic carbon source comprise at least one of citric acid, glucose, sucrose, soluble starch, salicylic acid, tartaric acid, oxalic acid, polysorbate, polyethylene glycol, sorbitan fatty acid ester, stearic acid, fatty acid glyceride, and amino acid. These organic carbon sources have good solubility, can be uniformly and stably attached to the surface of the first sintered product, and effectively inhibit the growth of lithium manganese iron phosphate particles during the second sintering process, so that the multi-site co-doped lithium manganese iron phosphate composite material has small particle size with high uniformity, large active specific surface area, and excellent conductive properties.

In some possible implementations, a mass ratio of the product of the first sintering treatment to the second organic carbon source is 1: (0.03 to 0.08). The organic carbon source of this ratio can form a complete and dense carbon coating layer on the surface of the active material of the core of the multi-site co-doped lithium manganese iron phosphate composite material, which not only improves the conductivity of the composite material, but also enables the composite material to have small particle size and large active specific surface area. In some specific embodiments, the mass ratio of the product of the first sintering treatment to the second organic carbon source can be 1: (0.03 to 0.05), 1: (0.04 to 0.06), 1: (0.05 to 0.08), etc. In some specific embodiments, the mass ratio of the product of the first sintering treatment to the second organic carbon source is 1: 0.05.

The third aspect of the embodiment of the present application provides a secondary battery, which comprises a cathode, an anode, a separator, and an electrolyte; the cathode contains the above-mentioned multi-site co-doped lithium manganese iron phosphate composite material or the multi-site co-doped lithium manganese iron phosphate composite material prepared by the above-mentioned method.

The secondary battery provided in the third aspect of the present application, because the cathode contains the above-mentioned multi-site co-doped lithium manganese iron phosphate composite material, the composite material has comprehensive properties such as specific capacity, high structural stability, high ionic conductivity, low polarization rate, small particle size, high uniformity, and high compacted density, thus being beneficial to improving the electrochemical properties such as energy density, cycle stability, and rate capability of the secondary battery.

In some possible implementations, the anode of the secondary battery comprises, but is not limited to, carbon materials such as graphite, soft carbon (such as coke), hard carbon, or nitrides, tin-based oxides, tin-based oxides, tin alloys, and nano-anode materials.

In some possible implementations, the separator comprises at least one material selected from polypropylene fiber, polyacrylonitrile fiber, poly(vinyl formal) fiber, poly(ethylene terephthalate), polyethylene terephthalate, polyamide fiber, and poly(p-phenylene terephthalamide).

In some possible implementations, the electrolyte comprises an aqueous solution containing at least one soluble salt of Na⁺, K⁺, and NH⁴⁺.

In order to enable the above implementation details and operations of the present application to be clearly understood by those skilled in the art, and to demonstrate the significant performance improvement of the multi-site co-doped lithium manganese iron phosphate composite material and preparation method thereof in the embodiments of the present application, the above technical solutions are illustrated by multiple examples below.

Example 1: A lithium manganese iron phosphate composite material co-doped at an iron site, a phosphorus site, and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, 6.1833 g of H₃BO₃ and 3.646 g of HCl were dissolved in proportion and uniformly mixed, then 839.97826 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then sieved through a 300-mesh sieve to obtain the lithium manganese iron phosphate composite material co-doped at the iron site, the phosphorus site, and the oxygen site.

Example 2: A lithium manganese iron phosphate composite material co-doped at an iron site, a phosphorus site, and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, 6.1833 g of H₃BO₃, and 3.646 g of HCl were dissolved in proportion and uniformly mixed, then 839.97826 g of a glucose solution was added to obtain a mixed solution, which was then uniformly mixed and ball-milled, then dried and crushed to obtain a precursor. 2. Sintering: the obtained precursor was pretreated at a constant temperature of 600°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 750°C in a nitrogen atmosphere for 10 hrs, cooled to room temperature, taken out, and crushed. The crushed powder was then sieved through a 300-mesh sieve to obtain the lithium manganese iron phosphate composite material co-doped at the iron site, the phosphorus site, and the oxygen site.

Example 3: A lithium manganese iron phosphate composite material co-doped at an iron site, a phosphorus site, and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, 6.1833 g of H₃BO₃, and 3.646 g of HCl were dissolved in proportion and uniformly mixed, then 839.97826 g of a glucose solution was added to obtain a mixed solution, which was then uniformly mixed and ball-milled, then dried and crushed to obtain a precursor. 2. Sintering: the obtained precursor was pretreated at a constant temperature of 550°C for 8 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 12 hrs, cooled to room temperature, taken out, and crushed. The crushed powder was then passed through a 300-mesh sieve to obtain the lithium manganese iron phosphate composite material co-doped at the iron site, the phosphorus site, and the oxygen site.

Example 4: A lithium manganese iron phosphate composite material co-doped at an iron site, a phosphorus site, and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, 6.1833 g of H₃BO₃ and 3.646 g of HCl were dissolved in proportion and uniformly mixed, then 839.97826 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 5 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the lithium manganese iron phosphate composite material co-doped at the iron site, the phosphorus site, and the oxygen site.

Comparative Example 1: An undoped lithium manganese iron phosphate composite material was prepared by the following steps: 1. Preparation of a precursor: 738.9 g of Li₂CO₃, 1320.56 g of NH₄H₂PO₄, 967.44 g of Fe(NO₃)₃, and 1073.688 g of Mn(NO₃)₂ were dissolved in proportion and uniformly mixed, and then 820.1176 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the undoped lithium manganese iron phosphate composite material.

Comparative Example 2: An iron-site-doped lithium manganese iron phosphate composite material was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, and 89.474 g of Mg(NO₃)₂ were dissolved in proportion and uniformly mixed, then 838.0124 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the iron-site-doped lithium manganese iron phosphate composite material.

Comparative Example 3: A phosphorus-site-doped lithium manganese iron phosphate composite material was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, and 6.1833 g of H₃BO₃ were dissolved in proportion and uniformly mixed, and then 821.35426 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the phosphorus-site-doped lithium manganese iron phosphate composite material.

Comparative Example 4: An oxygen-site-doped lithium manganese iron phosphate composite material was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, and 3.646 g of HCl are dissolved and mixed in proportion, and 820.8468 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the oxygen-site-doped lithium manganese iron phosphate composite material.

Comparative Example 5: A lithium manganese iron phosphate composite material co-doped at an iron site and a phosphorus site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, and 6.1833 g of H₃BO₃ were dissolved in proportion and uniformly mixed, 839.24906 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the lithium manganese iron phosphate composite material co-doped at the iron site and the phosphorus site.

Comparative Example 6: A lithium manganese iron phosphate composite material co-doped at an iron site and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 89.474 g of Mg(NO₃)₂, and 3.646 g of HCl were dissolved in proportion and uniformly mixed, 838.7416 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the lithium manganese iron phosphate composite material co-doped at the iron site and the oxygen site.

Comparative Example 7: A lithium manganese iron phosphate composite material co-doped at a phosphorus site and an oxygen site was prepared by the following steps: 1. Preparation of a precursor: 738.9 g of Li₂CO₃, 1320.56 g of NH₄H₂PO₄, 967.44 g of Fe(NO₃)₃, 1073.688 g of Mn(NO₃)₂, 6.1833 g of H₃BO₃, and 3.646 g of HCl were dissolved in proportion and uniformly mixed, 822.08346 g of a glucose solution was added to obtain a mixed solution, which was then uniformly mixed and ball-milled, then dried and crushed to obtain a precursor. 2. Sintering: the obtained precursor was pretreated at a constant temperature of 550°C for 6 hrs in a nitrogen atmosphere, and then 50 g of a glucose solution was added again and stirred to form a mixed slurry. After 20 times of bead milling, a resulting slurry was passed through a 300-mesh sieve and spray-dried. The dried powder was calcined at 700°C in a nitrogen atmosphere for 10 hrs, cooled to room temperature, taken out, and crushed. The crushed powder was then passed through a 300-mesh sieve to obtain the lithium manganese iron phosphate composite material co-doped at the phosphorus site and the oxygen site.

In order to verify the progress of the embodiments of the present application, the following performance tests were conducted on the lithium manganese iron phosphate composite materials prepared in the examples and comparative examples:
1. Powder compression test: 1g of a finished lithium manganese iron phosphate composite material of each of the examples and comparative example was weighed, and the compacted density and surface resistivity were tested under a pressure of 10 Mpa (by a 3T pressure sensor). The test results are shown in Table 1 below.

**Table 1**

| Table1_sm_0001] | | | |
|---|---|---|---|
| | Doping conditions | Resistivity Ω·cm | Compacted density g/cm³ |
| Comparative Example 1 | Undoped | 100.21 | 2.523 |
| Comparative Example 2 | Iron-site-doped | 10.3 | 2.524 |
| Comparative Example 3 | Phosphorus-site-doped | 25.6 | 2.524 |
| Comparative Example 4 | Oxygen-site-doped | 99.1 | 2.523 |
| Comparative Example 5 | Iron- and phosphorus-site-doped | 5.6 | 2.523 |
| Comparative Example 6 | Iron- and oxygen-site-doped | 10.3 | 2.523 |
| Comparative Example 7 | Phosphorus- and oxygen-site-doped | 15.9 | 2.523 |
| Example 1 | Iron-, phosphorus-, and oxygen-site-doped | 0.11 | 2.524 |
| Example 2 | Iron-, phosphorus-, and oxygen-site-doped | 0.001 | 2.746 |
| Example 3 | Iron-, phosphorus-, and oxygen-site-doped | 0.001 | 2.734 |
| Example 4 | Iron-, phosphorus-, and oxygen-site-doped | 0.001 | 2.867 |

It can be seen from the test results in the above Table 1 that, compared with Comparative Examples 1-7, the lithium manganese iron phosphate composite materials co-doped at the iron site, the phosphorus site, and the oxygen site prepared in Examples 1-4 of the present application have the lowest surface resistivity, which is no higher than 0.11 Ω·cm and as low as 0.001 Ω·cm, as well as having higher compacted density, which is higher than 2.524g/cm³ and reaches 2.867g/cm³.
2. Battery performance test: The lithium manganese iron phosphate composite material provided in each of the above examples and comparative example was used to assemble the battery as follows:

Preparation of cathode plate: the lithium manganese iron phosphate composite material, Super P conductive carbon black (SP), polyvinylidene fluoride (PVDF), and N-methylpyrrolidone (NMP) were mixed uniformly in a mass ratio of 93.5:2.5:4: 100 using a ball mill mixer for 2 hrs to obtain a cathode slurry; the prepared cathode slurry was added to an aluminum foil, evenly scraped with a scraper, dried at 130°C, and then rolled to obtain a cathode plate.

Battery assembling process: the prepared cathode was attached to a cathode metal shell with a conductive adhesive, a metal lithium plate was used as the anode, a Celgard 2400 microporous membrane was used as the separator, and a 1.0 mol/L LiPF₆ solution was used as the electrolyte. The solvent of the electrolyte was a mixture of ethylene carbonate (EC), diethyl carbonate (DEC), and ethyl methyl carbonate (EMC) in a volume ratio of 1:1:1. The button cells were assembled in a glove box.

The electrochemical properties of the button cells were tested using a LAND electrochemical tester at a charge termination voltage of 4.2 V and a discharge termination voltage of 2.0 V, such as 0.1 C specific energy and low-temperature/normal-temperature cycle performance. The manganese dissolution after the cycling was also tested, and the test results were shown in Table 2 below.

**Table 2**

| [Table1_sm_0002] | | | | | |
|---|---|---|---|---|---|
| | Doping conditions | 0.1C specific energy wh/kg (25°C) | Capacity retention rate after 5000 cycles % (25°C) | Capacity retention rate after 5000 cycles % (0°C) | Manganese dissolution (ppm) |
| Comparative Example1 | Undoped | 580.6 | 90 | 70 | 30.6 |
| Comparative Example2 | Iron-site-doped | 95 | 95 | 85 | 8.6 |
| Comparative Example3 | Phosphorus-site-doped | 90 | 90 | 70 | 7.6 |
| Comparative Example4 | Oxygen-site-doped | 95 | 95 | 85 | 5.6 |
| Comparative Example5 | Iron- and phosphorus-site-doped | 97 | 97 | 90 | 1.1 |
| Comparative Example6 | Iron- and oxygen-site-doped | 99 | 99 | 95 | 0.9 |
| Comparative Example7 | Phosphorus- and oxygen-site-doped | 95 | 95 | 85 | 5.6 |
| Example 1 | Iron-, phosphorus-, and oxygen-site-doped | 630.3 | 99 | 98 | 0.01 |
| Example 2 | Iron-, phosphorus-, and oxygen-site-doped | 613.6 | 99 | 98 | 0.02 |
| Example 3 | Iron-, phosphorus-, and oxygen-site-doped | 610.3 | 99 | 98 | 0.01 |
| Example 4 | Iron-, phosphorus-, and oxygen-site-doped | 534.1 | 99 | 98 | 0.01 |

It can be seen from the test results in the above Table 2 that compared with the undoped or insufficiently doped lithium manganese iron phosphate composite materials of comparative examples 1-7, the lithium manganese iron phosphate composite materials co-doped at the iron site, the phosphorus site, and the oxygen site prepared in Example 1 of the present application after being prepared into the secondary battery is tested to have the specific energy reach 630.3 wh/kg under 25°C and 0.1C, which is significantly higher than the test results in all the comparative example; moreover, the prepared button cell can still maintain a good capacity after 5000 cycles of charge and discharge tests at room temperature (25°C) and low temperature (0°C); the capacity retention rate reaches 99% after 5000 cycles at room temperature, and the capacity retention rate reaches 98% after 5000 cycles at low temperature. **In** addition, it is known from the test results of the dissolution of manganese in the cathode of the battery after cycling that after 5000 cycles of charge and discharge, the button cell in Example 1 of the present application only dissolves 0.01 ppm of manganese ions. Similarly, the lithium manganese iron phosphate composite materials co-doped at the iron site, the phosphorus site, and the oxygen site provided in Examples 2-4 all exhibited excellent specific energy, room temperature and low temperature cycle stability, and low manganese dissolution rate after being made into secondary batteries. Therefore, lithium manganese iron phosphate composite materials co-doped at the iron site, the phosphorus site, and the oxygen site prepared in the examples of the present application can improve the energy density, cycle stability, and safety performance of the secondary battery, and prolong the service life of the secondary battery.

The above are only optional embodiments of the present application and are not intended to limit the present application. For those skilled in the art, the present application may have various changes and variations. Any modification, equivalent replacement, improvement, etc. made within the spirit and principle of the present application should be included in the scope of the claims of the present application.

## Claims

1. A multi-site co-doped lithium manganese iron phosphate composite material, **characterized in that** the multi-site co-doped lithium manganese iron phosphate composite material comprises: a core, and a carbon shell layer, which is coated on an outer surface of the core; the core comprises an active material having a general chemical formula represented by LiMn_{0.6}Fe_{0.4-x}AₓP_{1-y}D_{y}O_{4-z}E_{z}, wherein A comprises at least one of Mg, V, Al, Ba, Ti, Ca, and Zn; D comprises B and/or Si; E comprises at least one of F, Cl, and Br; 0 < x≤0.2, 0<y<1, and 0<z<4.

2. The multi-site co-doped lithium manganese iron phosphate composite material according to claim 1, wherein in the active material having the general chemical formula represented by LiMn_{0.6}Fe_{0.4-x}AₓP_{1-y}D_{y}O_{4-z}E_{z}, 0<x≤0.01, 0<y<0.01, and 0<z<0.04.

3. The multi-site co-doped lithium manganese iron phosphate composite material according to claim 1 or 2, wherein based on a total mass of the multi-site co-doped lithium manganese iron phosphate composite material being 100%, a mass percentage of the carbon shell layer is 1% to 1.6%.

4. The multi-site co-doped lithium manganese iron phosphate composite material according to claim 1 or 2, wherein a thickness of the carbon shell layer is 2 nm to 5 nm.

5. The multi-site co-doped lithium manganese iron phosphate composite material according to claim 1 or 2, wherein a primary particle size of the multi-site co-doped lithium manganese iron phosphate composite material is 50 nm to 300 nm.

6. The multi-site co-doped lithium manganese iron phosphate composite material according to claim 1 or 2, wherein a secondary particle size of the multi-site co-doped lithium manganese iron phosphate composite material is 0.5 µm to 1.5 µm.

7. A method for preparing a multi-site co-doped lithium manganese iron phosphate composite material, **characterized by** comprising the following steps:
obtaining raw material components comprising a lithium source, a manganese source, a phosphorus source, an iron source, an A source, a D source, and an E source, according to a stoichiometric ratio of elements in the general chemical formula represented by LiMn_{0.6}Fe_{0.4-x}AₓP_{1-y}D_{y}O_{4-z}E_{z}, dissolving the raw material components in a solvent, adding a first organic carbon source and mixing for reaction, drying a resulting mixture and crushing, whereby obtaining a precursor powder; wherein the A source comprises at least one of a magnesium source, a vanadium source, an aluminum source, a barium source, a titanium source, a calcium source, and a zinc source; the D source comprises a boron source and/or a silicon source; the E source comprises at least one of a fluorine source, a chlorine source, and a bromine source; and 0 < x≤0.2, 0<y<1, 0<z<4; and
in an inert atmosphere, subjecting the precursor powder to a first sintering treatment, mixing with a second organic carbon source and granulating, and performing a second sintering treatment, whereby obtaining the multi-site co-doped lithium manganese iron phosphate composite material.

8. The method for preparing the multi-site co-doped lithium manganese iron phosphate composite material according to claim 7, wherein the step of mixing with the second organic carbon source and granulating comprises: preparing a mixed slurry from a product of the first sintering treatment and a second organic carbon source, followed by grinding and sieving, and spray drying to obtain a granulated powder.

9. The method for preparing the multi-site co-doped lithium manganese iron phosphate composite material according to claim 7, wherein conditions for the first sintering treatment comprise: sintering in the inert atmosphere at a temperature of 500°C to 600°C for 5 hrs to 7 hrs.

10. The method for preparing the multi-site co-doped lithium manganese iron phosphate composite material according to claim 7, wherein conditions for the first sintering treatment comprise: calcining in the inert atmosphere at a temperature of 650°C to 750°C for 8 hrs to 10 hrs.

11. The method for preparing the multi-site co-doped lithium manganese iron phosphate composite material according to claim 7, wherein a mass ratio of the raw material components to the first organic carbon source is 1: (0.1 to 0.2).

12. The method for preparing the multi-site co-doped lithium manganese iron phosphate composite material according to claim 7, wherein a mass ratio of the product of the first sintering treatment to the second organic carbon source is 1: (0.03 to 0.08).

13. The method for preparing the multi-site co-doped lithium manganese iron phosphate composite material according to claim 11 or 12, wherein the first organic carbon source and the second organic carbon source are each independently at least one selected from the group consisting of citric acid, glucose, sucrose, soluble starch, salicylic acid, tartaric acid, oxalic acid, polysorbate, polyethylene glycol, sorbitan fatty acid ester, stearic acid, fatty acid glyceride, and amino acid.

14. The method for preparing the multi-site co-doped lithium manganese iron phosphate composite material according to claim 11 or 12, wherein the solvent comprises water and/or nitric acid.

15. The method for preparing the multi-site co-doped lithium manganese iron phosphate composite material according to claim 11 or 12, wherein the lithium source comprises at least one of lithium carbonate, lithium hydroxide, lithium acetate, lithium oxalate, and lithium chloride;
and/or, the manganese source comprises at least one of manganese tetraoxide, manganese dioxide, manganese carbonate, manganese oxalate, manganese lactate, manganese chloride, manganese sulfate, manganese nitrate, and manganese dioxide;
and/or, the phosphorus source comprises at least one of phosphoric acid, diammonium hydrogen phosphate, and ammonium dihydrogen phosphate;
and/or, the iron source comprises at least one of ferrous oxalate, ferric oxalate, ferrous acetate, ferric acetate, ferrous nitrate, ferric nitrate, ferric phosphate, iron oxide, ferrous sulfate, ferric sulfate, ferrous chloride, ferric chloride.

16. The method for preparing the multi-site co-doped lithium manganese iron phosphate composite material according to claim 11 or 12, wherein the magnesium source comprises at least one of magnesium nitrate, magnesium chloride, magnesium carbonate, and magnesium sulfate;
and/or, the vanadium source comprises at least one of NH₄VO₃, vanadium nitrate, and vanadium pentoxide;
and/or, the aluminum source comprises at least one of aluminum nitrate, aluminum chloride, aluminum carbonate, and aluminum sulfate;
and/or, the barium source comprises at least one of barium hydroxide, barium oxide, and a barium salt;
and/or, the titanium source comprises at least one of titanium hydroxide, titanium oxide, and a titanium salt;
and/or, the calcium source comprises at least one of calcium hydroxide, calcium oxide, and a calcium salt;
and/or, the zinc source comprises at least one of zinc powder, zinc chloride, zinc sulfate, and a zinc gluconate.

17. The method for preparing the multi-site co-doped lithium manganese iron phosphate composite material according to claim 11 or 12, wherein the boron source comprises at least one of H₃BO₃, B₂O₃, BCl₃, and B₂S₃;
and/or, the silicon source comprises at least one of tetraethyl orthosilicate, methyltriethoxysilane, and a silane coupling agent.

18. The method for preparing the multi-site co-doped lithium manganese iron phosphate composite material according to claim 11 or 12, wherein the fluorine source comprises at least one of LiF, CaF₂, and NaF;
and/or, the chlorine source comprises at least one of LiCl·H₂O, HCl, NaCl, and KCl;
and/or, the bromine source comprises at least one of LiBr·H₂O, HBr, NaBr, and KBr.

19. The method for preparing the multi-site co-doped lithium manganese iron phosphate composite material according to claim 7, wherein the multi-site co-doped lithium manganese iron phosphate composite material comprises: a core, and a carbon shell, which is coated on an outer surface of the core; and the core comprises an active material having a general chemical formula represented by LiMn_{0.6}Fe_{0.4-x}AₓP_{1-y}D_{y}O_{4-z}E_{z}, wherein A comprises at least one of Mg, V, Al, Ba, Ti, Ca, and Zn; D comprises B and/or Si; E comprises at least one of F, Cl, and Br; 0 < x≤0.01, 0<y<0.01, and 0<z<0.04.

20. A secondary battery, **characterized in that** the secondary battery comprises: a cathode, an anode, a separator, and an electrolyte; wherein the cathode comprises the multi-site co-doped lithium manganese iron phosphate composite material according to any one of claims 1-6 or the multi-site co-doped lithium manganese iron phosphate composite material prepared by the method according to any one of claims 7-19.
